# EUROPÄISCHE PATENTSCHRIFT

(11) **EP 2 315 817 B1**
(45) Veröffentlichungstag und Bekanntmachung des Hinweises auf die Patenterteilung: **21.12.2016**
(21) Anmeldenummer: 09781506.2
(22) Anmeldetag: 05.08.2009
(51) Int. Cl.: C09J 123/22, C09J 133/06, C09J 7/02, C08L 23/22

(54) **HAFTKLEBEMASSE**
PRESSURE-SENSITIVE ADHESIVE
MATÉRIAU ADHÉSIF SENSIBLE À LA PRESSION

(30) Priorität: 15.08.2008 DE 102008037845
(43) Veröffentlichungstag der Anmeldung: 04.05.2011
(73) Patentinhaber: tesa SE, 22848 Norderstedt (DE)
(72) Erfinder: BHANDARI, Sabine, 22399 Hamburg (DE); CZERWONATIS, Franziska, 22393 Hamburg (DE); KREFT, Christian, 20255 Hamburg (DE); BURMEISTER, Axel, 22527 Hamburg (DE); BÜNZ, Stephan, 25746 Ostrohe (DE)
(86) Internationale Anmeldenummer: PCT/EP2009/060137
(87) Internationale Veröffentlichungsnummer: WO 2010/018108

(56) Entgegenhaltungen:
- EP-A1- 0 379 045
- EP-A2- 0 519 278
- WO-A1-97/23249
- GB-A- 2 094 809

## Beschreibung

Die Erfindung betrifft eine Haftklebemasse, Verfahren zu dessen Herstellung sowie Verwendungen der Haftklebemasse.

Aus dem Stand der Technik sind Haftklebemassen aus Polyisobutylen bekannt. Die Eigenschaften von Polyisobutylen variieren in Abhängigkeit von seinem Molekulargewicht. Alle Polyisobutylene weisen einen kautschukähnlichen Glasübergangspunkt von etwa -65 °C auf. Das Alterungs- und Witterungsverhalten von Polyisobutylenen ist jedoch wesentlich stabiler als das von Naturkautschuk, da Polyisobutylene einen gesättigten Charakter aufweisen.

Ebenso wie bei Naturkautschuk werden Polyisobutylene in der Regel mit klebrigmachenden Harzen abgemischt, wobei vorzugsweise Gemische aus hoch- und niedrigmolekularen Polyisobutylenen eingesetzt werden. Haftklebemassen auf Basis von Polyisobutylenen weisen in der Regel ähnliche klebtechnische Eigenschaften auf wie Naturkautschuk-Haftklebemassen. Die Alterungsstabilität von Haftklebemassen auf Basis von Polyisobutylenen entspricht hingegen eher der von Acrylathaftklebemassen.

Neben der Neigung von Haftklebemassen auf Basis hochmolekularer Polyisobutylene zu einem nachteiligen Fließverhalten bei Raumtemperatur und darunter liegenden Temperaturen (kalter Fluss) ist ihre fehlende Vernetzbarkeit mittels Elektronenstrahlung besonders nachteilig. Eine Vernetzung von Polymeren mittels Elektronenstrahlung, im Folgenden als Elektronenstrahlhärtung (ESH) bezeichnet, sorgt für eine Erhöhung des Molekulargewichtes der zu vernetzenden Komponenten einer Haftklebemasse und sorgt damit für eine stärke Kohäsion zwischen den Komponenten, ohne dass die Klebrigkeit und das Ablösefestigkeit der Haftklebemasse nachteilig beeinflusst werden. Polyisobutylene können aufgrund ihres gesättigten Charakters nicht durch Elektronenstrahlhärtung vernetzt werden, was zu einer mangelhaften Kohäsion von Haftklebemassen auf Basis von Polyisobutylenen insbesondere bei Temperaturen unter Raumtemperaturen führt.

**Aus der** WO 97/23249 A1 **ist eine Zusammensetzung eines druckempfindlichen Klebers für die medizinische Anwendungen bekannt, die eine Mischung von mindestens zwei Komponenten enthält, umfassend 5 bis 95% eines druckempfindlichen Acrylatklebers und 5 bis 95% einer zweiten Komponente, die entweder von (a) mindestens einem Elastomer mit einem Klebeharz oder (b) mindestens einem thermoplastischen Elastomer gebildet wird.**

Aufgabe der Erfindung ist es, die Nachteile nach dem Stand der Technik zu beseitigen. Es soll insbesondere eine Haftklebemasse auf Basis von Polyisobutylenen angegeben werden, wobei die Haftklebemasse insbesondere bei Temperaturen unter Raumtemperatur ein exzellentes Fließverhalten und eine hohe Kohäsion aufweist. Ferner sollen Verfahren zur Herstellung einer solchen Haftklebemasse und Verwendungen dieser Haftklebemasse angegeben werden.

Diese Aufgabe wird durch die Merkmale der Ansprüche 1, **8 und 9** gelöst. Zweckmäßige Ausgestaltungen der Erfindungen ergeben sich aus den Merkmalen der Ansprüche 2 bis 7.

Nach Maßgabe der Erfindung ist eine Haftklebemasse vorgesehen, die zumindest ein Polyisobutylen, zumindest ein (Meth)acrylat-Polymer oder -Copolymer und gegebenen-falls Additive umfasst, wobei der Anteil des Polyisobutylens an der Haftklebemasse mindestens 10 Gew.-%, bezogen auf das Gewicht der Haftklebemasse, beträgt.

Die erfindungsgemäßen Haftklebemassen zeichnen sich gegenüber Acrylathaftklebemassen durch eine hohe Klebkraft auch bei niedrigen Temperaturen aus. Dies gilt insbesondere für Temperaturen unter Raumtemperatur, beispielsweise Temperaturen von 5 °C oder weniger. Bei Tieftemperaturen verlieren Acrylathaftklebemassen an Klebkraft, während die Klebkraft der erfindungsgemäßen Haftklebemasse sogar steigt. Dieser Effekt ist auf die Flexibilität des Polyisobutylens zurückzuführen, die wiederum auf dessen sehr tiefen Glasübergangspunkt (Tg) beruht. Die hohe Klebkraft der erfindungsgemäßen Haftklebemassen auch bei niedrigen Temperaturen macht diese besonders für Anwendungen im Außenbereich geeignet.

Ferner zeigt die erfindungsgemäße Haftklebemasse eine vergleichsweise konstante Klebkraft über längere Lagerungszeiten auf Untergründen (Langzeitverklebungen). Bei Acrylathaftklebemassen nimmt hingegen die Klebkraft bei Langzeitverklebungen zu. Dies ist nachteilig, wenn ein Klebeband, das diese Haftklebemassen umfasst, wieder entfernt werden soll. Die erfindungsgemäßen Haftklebemasse gewährleistet hingegen, dass ein Klebband, das eine solche Haftklebemasse aufweist, eine im wesentlichen unveränderte

Klebkraft besitzt, was eine gezielt Auswahl der Haftklebemasse für einen bestimmten Klebezweck erleichtert.

Ferner besitzen die erfindungsgemäßen Haftklebemassen eine hohe Alterungsbeständigkeit. Dies ist auf den gesättigten Charakter sowohl der Polyisobutylen-Komponente als auch der (Meth)acrylat-Polymer- oder -Copolymer-Komponente zurückzuführen.

Außerdem verfügen die erfindungsgemäßen Haftklebemassen über eine gute Verarbeitbarkeit auch bei hohen Temperaturen, was auf ihre Viskosität zurückzuführen ist, und eine hohe Verklebungsfestigkeit auch auf rauen Untergründen.

Der Anteil des Polyisobutylens an der Haftklebemasse beträgt vorzugsweise mindestens 25 Gew.-%, stärker bevorzugt mindestens 45 Gew.-%, noch stärker bevorzugt mindestens 60 %, jeweils bezogen auf das Gewicht der Haftklebemasse.

Der Anteil der Additive an der Haftklebemasse liegt bevorzugt zwischen 0 und 10 Gew.-%, bezogen auf das Gewicht der Haftklebemasse.

Die erfindungsgemäße Haftklebemasse enthält, bezogen auf das Gewicht der Haftklebemasse,
(a) 40 bis 60 Gew.-% Polyisobutylen;
(b) 60 bis 40 Gew.-% (Meth)acrylat-Polymer oder-Copolymer; und
(c) 0 bis 10 Gew.-% Additive.

In einer Ausführungsform enthält die erfindungsgemäße Haftklebemasse, bezogen auf das Gewicht der Haftklebemasse,
(a) 45 bis 55 Gew.-% Polyisobutylen;
(b) 55 bis 45 Gew.-% (Meth)acrylat-Polymer oder-Copolymer; und
(c) 0 bis 5 Gew.-% Additive.

In einer weiteren Ausführungsform enthält die erfindungsgemäße Haftklebemasse, bezogen auf das Gewicht der Haftklebemasse,
(a) 45 bis 55 Gew.-% Polyisobutylen;
(b) 55 bis 45 Gew.-% (Meth)acrylat-Polymer oder-Copolymer; und
(c) 0 Gew.-% Additive.

erfindungsgemäße Haftklebemasse **enthält** keine klebrigmachenden Harze enthält.

In einer bevorzugten Ausführungsform ist die erfindungsgemäße Haftklebemasse einer Elektronenstrahlhärtung unterzogen worden.

Vorzugsweise ist das Polyisobutylen ein hochmolekulares Polyisobutylen. Vorzugsweise weist das Polyisobutylen ein gewichtsmittleres Molekulargewicht größer oder gleich 500.000, stärker bevorzugt größer oder gleich 800.000, noch stärker bevorzugt größer 1.000.000 auf.

Es können Gemische aus Polyisobutylenen mit unterschiedlichen Molekulargewichten und Molmasseverteilungen eingesetzt werden.

Die klebende Wirkung der Haftklebemasse beruht im Wesentlichen auf dem Gemisch aus Polyisobutylen und (Meth)acrylat-Polymer oder -Copolymer, so dass der Haftklebemasse kein klebrigmachendes Harz zugesetzt werden muss.

Als (Meth)acrylat-Polymer oder -Copolymer können alle Polymere und/oder Copolymere verwendet werden, die für die Herstellung von Acrylathaftklebemassen eingesetzt werden. Das (Meth)acrylat-Polymer oder -Copolymer kann aus beispielsweise Acrylsäureestern und/oder Methacrylsäureestern der Formel CH₂ = CH(R₁)(COOR₂) hergestellt sein, wobei R₁ H und/oder CH₃ und R₂ H und/oder Alkylketten mit 1 bis 30 Kohlenstoffatomen, 4 bis 14 Kohlenstoffomen, bevorzugt 4 bis 9 Kohlenstoffatomen sind. Spezielle Beispiele, ohne sich durch diese Aufzählung einschränken zu wollen, sind n-Butylacrylat, n-Pentylacrylat, n-Hexylacrylat, n-Heptylacrylat, n-Octylacrylat, n-Nonylacrylat, Laurylacrylat, Stearylacrylat, Behenylacrylat und deren verzweigten Isomere, wie z. B. 2-Ethylhexylacrylat.

Als Additive können der Haftklebemasse alle dem Fachmann für die Herstellung von Polyisobutylen-Haftklebemassen und Acrylathaftklebemassen bekannten Additive zugesetzt werden, beispielsweise Füllstoffe, Pigmente, rheologische Additive, Additive zur Verbesserung der Haftung, Weichmacher, Elastomere, Alterungsschutzmittel (Antioxidantien), Lichtschutzmittel, UV-Absorber sowie sonstige Hilfs- und Zusatzstoffe, wie beispielsweise Trockenmittel (zum Beispiel Molekularsieb-Zeolithe, Calciumoxid), Fließ- und Verlaufmittel, Benetzer (Tenside) oder Katalysatoren.

Als Füllstoffe können alle feingemahlenen festen Zusatzstoffe wie zum Beispiel Kreide, Magnesiumcarbonat, Zinkcarbonat, Kaolin, Bariumsulfat, Titandioxid oder Calciumoxid eingesetzt werden. Weitere Beispiele sind Talkum, Glimmer, Kieselsäure, Silikate oder Zinkoxid. Auch Mischungen der genannten Stoffe können eingesetzt werden.

Die eingesetzten Pigmente können organischer oder anorganischer Natur sein. Es kommen alle Arten organischer oder anorganischer Farbpigmente in Frage, beispielsweise Weißpigmente wie etwa Titandioxid zur Verbesserung der Licht- und UV-Stabilität, sowie Metallpigmente.

Beispiele für rheologische Additive sind pyrogene Kieselsäuren, Schichtsilikate (Bentonite), hochmolekulare Polyamidpulver oder Rhizinusölderivat-Pulver.

Additive zur Verbesserung der Haftung können zum Beispiel Stoffe aus den Gruppen der Polyamide, Epoxide oder Silane sein.

Beispiele für Weichmacher sind Phthalsäureester, Trimellitsäureester, Phosphorsäureester, Ester der Adipinsäure sowie andere acyclische Dicarbonsäureester, Fettsäureester, Hydroxycarbonsäureester, Alkylsulfonsäureester des Phenols, aliphatische, cycloaliphatische und aromatische Mineralöle, Kohlenwasserstoffe, flüssige oder halbfeste Kautschuke (zum Beispiel Nitril- oder Polyisoprenkautschuke), flüssige oder halbfeste Polymerisate aus Buten und/oder Isobuten, Acrylsäureester, Polyvinylether, Flüssig- und Weichharze auf Basis der Rohstoffe, die auch die Basis für Klebrigmacherharze darstellen, Wollwachs und andere Wachse, Silikone sowie Polymerweichmacher wie etwa Polyester oder Polyurethane.

Geeignete Harze sind alle natürlichen und synthetischen Harze, wie etwa Kolophonium-Derivate (zum Beispiel durch Disproportionierung, Hydrierung oder Veresterung entstandene Derivate), Cumaron-Inden- und Polyterpen-Harze, aliphatische oder aromatische Kohlenwasserstoff-Harze (C-5-, C-9-, (C-5)₂-Harze), gemischte C-5/C-9-Harze, hydrierte und teilhydrierte Derivate der genannten Typen, Harze aus Styrol oder Methylstyrol sowie Terpen-Phenolharze und weitere wie aufgeführt in Ullmanns Enzyklopädie der technischen Chemie (4. Aufl.), Band 12, S. 525-555, Weinheim. Mittels der Harze können die klebetechnischen Eigenschaften der erfindungsgemäßen Haftvermittler eingestellt und kontrolliert werden. Ferner können die Harze als Phasenvermittler dienen.

Geeignete Elastomere sind zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.

Die Rezeptierung der erfindungsgemäßen Klebmasse mit weiteren Bestandteilen, wie zum Beispiel Füllstoffen und Weichmachern, ist ebenfalls Stand der Technik.

Die erfindungsgemäßen Haftklebemassen können mittels Elektronenstrahlhärtung (ESH) vernetzt werden. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Standes der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Die Elektronenstrahlhärtung bewirkt eine Vernetzung des (Meth)acrylat-Polymers oder -Copolymers der erfindungsgemäßen Haftklebemasse. Damit wird eine deutliche Verbesserung der Temperaturbeständigkeit der erfindungsgemäßen Haftklebemasse erreicht, wie Kurzzeittemperaturbeständigkeitstests (SAFT) gezeigt haben.

Schließlich betrifft die Erfindung die Verwendung der vorstehend beschriebenen Klebemassen für ein ein- oder doppelseitiges Klebeband, bestehend aus zumindest einem Träger und einer Schicht einer Haftklebemasse.

Als Trägermaterialien für die erfindungsgemäße Haftklebemasse, beispielsweise für Klebebänder, werden die dem Fachmann geläufigen und üblichen Materialien, wie Folien (Polyester, PET, PE, PP, BOPP, PVC, Polyimid), Vliese, Schäume, Gewebe und Gewebefolien sowie Trennpapier (Glassine, HDPE, LDPE) verwendet. In einer weiteren Ausführungsform werden mit der Haftklebemasse Maskierungsbänder hergestellt. Diese Aufzählung ist nicht abschließend.

Nach Maßgabe der Erfindung ist somit ferner ein Verfahren zur Herstellung der erfindungsgemäßen Haftklebemasse, das die folgenden Schritte umfasst:
(a) Bereitstellen des Polyisobutylens, des (Meth)acrylat-Polymers oder -Copolymers und gegebenenfalls der Additive; und
(b) Mischen der in Schritt (a) bereitgestellten Komponenten unter Erhalt eines homogenen Gemisches; und
(c) Ausformen des in Schritt (b) erhaltenen Gemisches, vorgesehen

Schritt (b) kann in einem geeigneten Mischaggregat, z. B. einem Planetwalzenextruder oder Doppelschneckenextruder, durchgeführt werden. Bevorzugt sind eine Extrudertemperatur von mehr als 130 °C, besonders bevorzugt 130 °C, und eine Drehzahl des Extruders im Misch- bzw. Förderbetrieb von mehr als 50 Umdrehungen/min, besonders bevorzugt 75 bis 100 Umdrehungen/min, zweckmäßigerweise wird das Temperaturprofil PWE (Temperierkreis 1, 2 und 3 gewählt).

Die in Schritt (b) erhaltenen Gemische, die nachfolgend auch als Blends bezeichnet werden, können dann mittels eines Walzenauftragwerkes zu einer haftklebrigen Schicht ausgeformt werden. Dazu wird das Gemisch zweckmäßigerweise mit Schichtdicken von 15 bis 200 g/m², bevorzugt 50 g/m², auf einen Träger, vorzugsweise Papier oder eine Folie, aufgebracht.

Das Gemisch wird vorzugsweise einer Elektronenstrahlhärtung (ESH) unterzogen. Dieser Verfahrensschritt wird zweckmäßigerweise im Anschluss an das Ausformen des Gemisches durchgeführt.

Die Erfindung wird nachstehend unter Bezugnahme auf die Zeichnungen anhand von Beispielen ausführlicher erläutert. Dabei zeigen
- Fig. 1: ein Diagramm, das die Viskosität, Klebkraft und Ergebnisse von Kurztemperaturtests (SAFT) beispielhafter Haftklebemassen der Erfindung im Vergleich zu Acrylathaftklebemassen zeigt; und
- Fig.2: ein Diagramm, das die zeitliche Änderung der Klebkraft beispielhafter Haftklebemassen der Erfindung im Vergleich zu Acrylathaftklebemassen nach einer Temperatur bei 80 °C zeigt.

### Beispiele

Es wurden die in Tabelle 1 angegebenen erfindungsgemäßen Haftklebemassen hergestellt. Keine dieser Haftklebemassen enthielt Additive.

Die Haftklebemassen wurden hergestellt, indem ein hochmolekulares kautschukartiges Polyisobutylen (Oppanol B 100, gewichtsmittleres Molekulargewicht 1.100.000) mit einer wässerigen, schwach ammoniakalischen Acrylat-Copolymer-Dispersion (Primal PS 83 D) in einem Planetwalzenextruder (Temperaturprofil PWE (Temperierkreise 1, 2 und 3)) bei 130 °C gemischt wurde. Die Drehzahl des Extruders betrug im Misch- bzw. Förderbetrieb 75-100 U/ min. Die so erhaltenen erfindungsgemäßen Haftklebemassen wurden über ein Walzenauftragswerk zu einem haftklebrigen Film von 50 g/m² auf einer Folie ausgeformt.

**Tabelle 1**

| Bezeichnung | Anteil des Polyisobutylens [Gew.-%] | Anteil des (Meth)acrylat-Polymers oder -Copolymers [Gew.-%] |
|---|---|---|
| NB-05-28 | 95 | 5 |
| NB-05-29 | 89 | 11 |
| NB-05-30 | 82 | 18 |
| NB-05-31 | 75 | 25 |
| NB-05-32 | 67 | 33 |
| NB-05-33 | 57 | 43 |
| NB-05-34 | 46 | 54 |
| NB-05-35 | 33 | 67 |
| NB-05-36 | 18 | 82 |

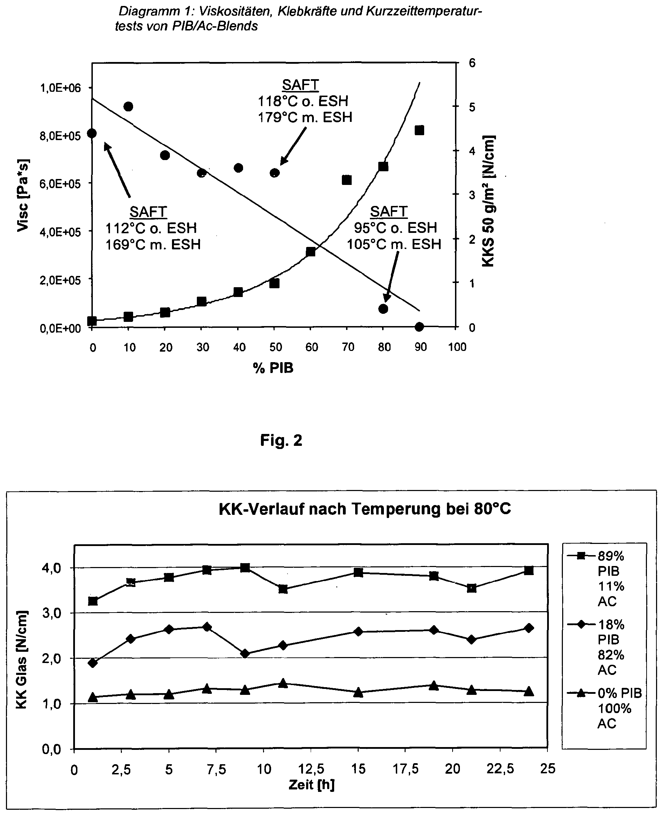

In dem in Fig. 1 gezeigten Diagramm sind die Viskositäten (Visc), die Klebkräfte auf Stahl (KKS) und bei ausgewählten Beispielen die Kurzzeittemperaturbeständigkeiten (SAFT) von erfindungsgemäßen Haftklebemassen, die in Fig. 1 als PIB/Acrylat-Mischungen bezeichnet sind, dargestellt. Auf der Abszisse ist der Gewichtsanteil des Acryl-Copolymers *(von 0 bis 100 Gewichtsprozent)* gezeigt. Die verwendeten Abkürzungen haben folgende Bedeutung:
- Ac: Acrylat-Copolymer
- ESH: Elektronenstrahlhärtung
- KKS 50: Klebkraft *eines 50 mm breitem Klebebandes* auf einem Stahlblech
- m.: mit
- o.: ohne
- PIB: Polyisobutylen
- SAFT: Kurzzeittemperaturbeständigkeit gemäß dem Shear Adhesion Failure Test
- Visc: Viskosität

Die linear fallende Kurve zeigt die Viskosität der Haftklebmassen, während die parabellartig ansteigende Kurve die Klebkraft der Haftklebemassen zeigt. Es ist zu erkennen, dass bei bevorzugten Mischungsverhältnissen der erfindungsgemäßen Haftklebemassen auch ohne eine Zugabe von Harz Klebkräfte von 3 bis 4 N/cm) erzielt werden können. Dies sind beispielsweise im Bereich der Anwendungen von Maskierungs-Bändern üblich.

Mittels einer ESH-Vernetzung des Acrylats lässt sich ferner die Temperaturbeständigkeit der erfindungsgemäßen Haftklebemassen deutlich verbessern. Dies wird durch den Kurzzeittemperaturbeständigkeitstest (SAFT) gezeigt.

Tabelle 2 zeigt für unterschiedliche Haftklebemassen die Klebkraft auf Stahl bei RaumTemperatur (RT), 5 °C und 14 Tage nach Aufziehen und Lagern bei Raumtemperatur.

**Tabelle 2: Klebkraft auf Stahl von erfindungsgemäßen Haftklebemassen**

| Ac-Gehalt [Gew.-%] | RT (23 °C) | 5 °C | 14 d nach Aufziehen, RT |
|---|---|---|---|
| 100* | 5,0 | 4,1 | 8,8 |
| 80 | 5,0 | 5,0 | 6,7 |
| 50 | 3,8 | 4,6 | 5,5 |
| 30 | 3,5 | 5,6 | 5,3 |

| | | | |
|---|---|---|---|
| *Vergleichsbeispiel | | | |

Aus Tabelle 2 ist eine Veränderung der Klebkraft nach dem Aufziehen bzw. unter Temperatureinfluss erkennbar. Die Klebkraft der Haftklebemassen auf Untergründen wie Stahl einer Lagerungszeit hängt von dem gewählten Gewichtsverhältnis von Polyisobutylen und Acrylat-Copolymer ab. Während die reine Acrylathaftklebemasse eine deutlich steigende Klebkraft zeigt, bleibt sie bei den erfindungsgemäßen Haftklebemassen mit einem Gewichtsverhältnis von Polyisobutylen und Acrylat-Copolymer von 1 zu 1 auf im Wesentlichen konstantem Niveau. Dies belegt die Vorteile der erfindungsgemäßen Haftklebemassen bei der Langzeitverklebung mit anschließender gewünschter Entfernung des Klebebandes, das die erfindungsgemäße Haftklebemasse trägt.

Ferner zeigte sich, dass die Klebkraft bei niedrigen Temperaturen. z. B. bei Verklebungen im Außenbereich, über das Gewichtsverhältnis von Polyisobutylen und Acrylat-Copolymer beeinflussbar ist. Während reine Acrylathaftklebemassen bei Tieftemperaturen an Klebkraft verlieren, können bei den erfindungsgemäßen Haftklebemassen je nach Gehalt an Polyisobutylen die Klebkräfte bei tiefen Temperaturen sogar steigen, bedingt durch die Flexibilität des Polyisobutylens aufgrund seines charakteristischen, sehr tiefen Glasübergangspunktes (Tg).

Fig. 2 zeigt die Alterungsbeständigkeit der erfindungsgemäßen Haftklebemassen. Es ist zu erkennen, dass die erfindungsgemäßen Haftklebemassen (89 Gew.-% Polyisobutylen/11 Gew.-% Acrylat-Copolymer; 18 Gew.% Polyisobutylen/82 Gew.-% Acrylat-Copolymer) gegenüber reinen Acrylathaftklebemassen Vorteile aufweisen. Aufgrund des gesättigten Charakters sowohl des Polyisobutylens als auch des Acrylat-Copolymers ist die Alterungsbeständigkeit der erfindungsgemäßen Haftklebemassen auch über einen langen Zeitraum relativ konstant. Dies gilt für einen weiten Bereich des Polyisobutylen/ Acrylat-Copolymer-Gewichtsverhältnisses.

Die in Fig. 2 verwendeten Abkürzungen haben folgende Bedeutungen:
- AC: Acrylat-Copolymer
- KK Glas: Klebkraft auf Glas
- PIB: Polyisobutylen

## Patentansprüche

1. Haftklebemasse, umfassend zumindest ein Polyisobutylen, zumindest ein (Meth)acrylat-Polymer oder -Copolymer und gegebenenfalls Additive,
**dadurch gekennzeichnet, dass**
die Haftklebemasse bezogen auf das Gewicht der Haftklebemasse,
(a) 40 bis 60 Gew.-% Polyisobutylen;
(b) 60 bis 40 Gew.-% (Meth)acrylat-Polymer oder -Copolymer; und
(c) 0 bis 10 Gew.-% Additive enthält,
und wobei die Haftklebemasse keine klebrigmachenden Harze enthält.

2. Haftklebemasse nach Anspruch 1, **dadurch gekennzeichnet, dass** sie, bezogen auf das Gewicht der Haftklebemasse,
(a) 45 bis 55 Gew.-% Polyisobutylen;
(b) 55 bis 45 Gew.-% (Meth)acrylat-Polymer oder -Copolymer; und
(c) 0 bis 5 Gew.-% Additive enthält.

3. Haftklebemasse nach Anspruch 1, **dadurch gekennzeichnet, dass** sie, bezogen auf das Gewicht der Haftklebemasse,
(a) 45 bis 55 Gew.-% Polyisobutylen;
(b) 55 bis 45 Gew.-% (Meth)acrylat-Polymer oder -Copolymer; und
(c) 0 Gew.-% Additive enthält.

4. Haftklebemasse nach einem der vorstehenden Ansprüche, **dadurch gekennzeichnet, dass** sie einer Elektronenstrahlhärtung unterzogen worden ist.

5. Haftklebemasse nach einem der vorstehenden Ansprüche, **dadurch gekennzeichnet, dass** das Polyisobutylen ein gewichtsmittleres Molekulargewicht größer oder gleich 500.000 aufweist.

6. Haftklebemasse nach einem der vorstehenden Ansprüche, **dadurch gekennzeichnet, dass** das Polyisobutylen ein gewichtsmittleres Molekulargewicht größer oder gleich 800.000 aufweist.

7. Haftklebemasse nach einem der vorstehenden Ansprüche, **dadurch gekennzeichnet, dass** das Polyisobutylen ein gewichtsmittleres Molekulargewicht größer oder gleich 1.000.000 aufweist.

8. Verwendung einer Haftklebemasse nach einem der Ansprüche 1 bis 7 für ein Haftklebeband.

9. Verwendung einer Haftklebemasse nach einem der Ansprüche 1 bis 7 für ein Maskierungsband.

## Claims

1. Pressure-sensitive adhesive comprising at least one polyisobutylene, at least one (meth)acrylate polymer or copolymer, and optionally additives,
**characterized in that**
the pressure-sensitive adhesive comprises, based on the weight of the pressure-sensitive adhesive,
(a) 40% to 60% by weight of polyisobutylene;
(b) 60% to 40% by weight of (meth)acrylate polymer or copolymer; and
(c) 0% to 10% by weight of additives,
and wherein the pressure-sensitive adhesive does not comprise any tackifying resins

2. Pressure-sensitive adhesive according to Claim 1, **characterized in that** it comprises, based on the weight of the pressure-sensitive adhesive,
(a) 45% to 55% by weight of polyisobutylene;
(b) 55% to 45% by weight of (meth)acrylate polymer or copolymer; and
(c) 0% to 5% by weight of additives.

3. Pressure-sensitive adhesive according to Claim 1, **characterized in that** it comprises, based on the weight of the pressure-sensitive adhesive,
(a) 45% to 55% by weight of polyisobutylene;
(b) 55% to 45% by weight of (meth)acrylate polymer or copolymer; and
(c) 0% by weight of additives.

4. Pressure-sensitive adhesive according to any of the preceding claims, **characterized in that** it has been subjected to electron beam curing.

5. Pressure-sensitive adhesive according to any of the preceding claims, **characterized in that** the polyisobutylene has a weight-average molecular weight of greater than or equal to 500 000.

6. Pressure-sensitive adhesive according to any of the preceding claims, **characterized in that** the polyisobutylene has a weight-average molecular weight of greater than or equal to 800 000.

7. Pressure-sensitive adhesive according to any of the preceding claims, **characterized in that** the polyisobutylene has a weight-average molecular weight of greater than or equal to 1 000 000.

8. Use of a pressure-sensitive adhesive according to any of Claims 1 to 7 for a pressure-sensitive adhesive tape.

9. Use of a pressure-sensitive adhesive according to any of Claims 1 to 7 for a masking tape.

## Revendications

1. Masse autoadhésive, comprenant au moins un polyisobutylène, au moins un polymère ou copolymère de (méth)acrylate et le cas échéant des additifs, **caractérisée en ce que** la masse autoadhésive contient, par rapport au poids de la masse autoadhésive,
(a) 40 à 60% en poids de polyisobutylène ;
(b) 60 à 40% en poids de polymère ou de copolymère de (méth)acrylate ; et
(c) 0 à 10% en poids d'additifs,
la masse autoadhésive ne contenant pas de résine collante.

2. Masse autoadhésive selon la revendication 1, **caractérisée en ce qu'**elle contient, par rapport au poids de la masse autoadhésive,
(a) 45 à 55% en poids de polyisobutylène ;
(b) 55 à 45% en poids de polymère ou de copolymère de (méth)acrylate ; et
(c) 0 à 5% en poids d'additifs.

3. Masse autoadhésive selon la revendication 1, **caractérisée en ce qu'**elle contient, par rapport au poids de la masse autoadhésive,
(a) 45 à 55% en poids de polyisobutylène ;
(b) 55 à 45% en poids de polymère ou de copolymère de (méth)acrylate ; et
(c) 0% en poids d'additifs.

4. Masse autoadhésive selon l'une quelconque des revendications précédentes, **caractérisée en ce qu'**elle a été soumise à un durcissement par un rayonnement électronique.

5. Masse autoadhésive selon l'une quelconque des revendications précédentes, **caractérisée en ce que** le polyisobutylène présente un poids moléculaire pondéral moyen supérieur ou égal à 500.000.

6. Masse autoadhésive selon l'une quelconque des revendications précédentes, **caractérisée en ce que** le polyisobutylène présente un poids moléculaire pondéral moyen supérieur ou égal à 800.000.

7. Masse autoadhésive selon l'une quelconque des revendications précédentes, **caractérisée en ce que** le polyisobutylène présente un poids moléculaire pondéral moyen supérieur ou égal à 1.000.000.

8. Utilisation d'une masse autoadhésive selon l'une quelconque des revendications 1 à 7 pour un ruban autoadhésif.

9. Utilisation d'une masse autoadhésive selon l'une quelconque des revendications 1 à 7 pour un ruban de masquage.
